Europäisches Patentamt

European Patent Office

Office européen des brevets

(19)

(11) Numéro de publication: **0 251 942**
**B1**

(12) **FASCICULE DE BREVET EUROPEEN**

(45) Date de publication du fascicule du brevet: **08.08.90**

(51) Int. Cl.⁵: **B 30 B 11/02, F 16 F 15/02**

(21) Numéro de dépôt: **87420152.8**

(22) Date de dépôt: **12.06.87**

(54) **Suspension pneumatique des vibrotasseuses utilisées en particulier pour la production de blocs carbonés.**

(30) Priorité: **16.06.86 FR 8608982**

(43) Date de publication de la demande:
**07.01.88 Bulletin 88/01**

(45) Mention de la délivrance du brevet:
**08.08.90 Bulletin 90/32**

(84) Etats contractants désignés:
**AT CH DE ES GR IT LI NL SE**

(56) Documents cités:
**DE-A-2 815 870**
**FR-A-1 444 020**
**FR-A-2 029 336**
**FR-A-2 088 538**
**FR-A-2 238 872**

(73) Titulaire: **ALUMINIUM PECHINEY**
**23, rue Balzac**
**F-75008 Paris Cédex 08 (FR)**

(72) Inventeur: **Vanvoren, Claude**
**L'Echaillon-Hermillon**
**F-73300 St Jean De Maurienne (FR)**
Inventeur: **Coste, Benoît**
**Le Clos Minoret rue Bonrieux**
**F-73300 St Jean De Maurienne (FR)**

(74) Mandataire: **Pascaud, Claude et al**
**PECHINEY 28, rue de Bonnel**
**F-69433 Lyon Cédex 3 (FR)**

Courier Press, Leamington Spa, England.

## Description

### Domaine Technique De L'invention

L'invention concerne un dispositif de suspension pneumatique des vibrotasseuses, en particulier, mais non exclusivement, celles destinées à la production d'électrodes carbonées pour les cuves d'électrolyse produisant de l'aluminium selon le procédé Hall-Héroult, par électrolyse d'alumine dissoute dans de la cryolithe fondue.

### Etat de la Technique

La plupart des installations modernes pour la production d'aluminium par le procédé Hall-Héroult utilisent des anodes précuites. Ces anodes sont obtenues par mise en forme à environ 120 à 160°C, d'une pâte carbonée obtenue par malaxage à environ 120 à 200°C de coke broyé et de brai.

La qualité des anodes joue un rôle important dans la bonne marche et dans l'économie du procédé et les exploitants s'efforcent d'améliorer sans cesse les caractéristiques des anodes, en particulier en augmentant leur conductivité électrique (donc le rendement énergétique global de l'électrolyse) et leur compacité, donc leur durée de vie. En effet, le changement d'anode est une opération qui, même mécanisée et automatisée, reste délicate, et perturbe localement l'équilibre électrique et thermique de la cuve.

Le procédé le plus utilisé pour la mise en forme des anodes est le vibrotassage. Ce procédé peut également être utilisé pour la mise en forme d'autres types de blocs carbonés: blocs de garnissage cathodique pour cuves d'électrolyse pour A1 ou encore électrodes pour sidérurgie, électrométallurgie, etc.

Ainsi, selon FR-A-2 088 538, le produit à base de pâte carbonée destiné à être mis en forme par compactage est introduit dans un moule ou châssis de moulage dont le fond est constitué par une table vibrante et dont le dessus est fermé par un lourd couvercle, actionné par un vérin, au contact de la partie supérieure de la pièce. La table vibrante est mise en vibration par un mécanisme à excentrique solidaire d'une contre-masse supportée elle-même par une fondation en béton par l'intermédiaire de ressorts.

### Inconvenients de L'art Anterieur

La suspension de la vibro-tasseuse par des ressorts n'est pas entièrement satisfaisante. On peut notamment lui reprocher:

a) de ne pas être réglable. En effet, pour pouvoir s'adapter aux variations de poids de pâte ou de moule, dans le cas de la fabrication de blocs carbonés de formats différents sur une même table, ou aux variations des caractéristiques de la pâte dans le temps, l'exploitant ne peut que faire varier la vitesse de rotation des balourds excentrés.

b) de ne pas être parfaitement équilibrée; soit que les ressorts n'aient pas, à l'origine, une raideur ou une hauteur égales, soit que leur raideur évolue différemment selon leur vieillissement.

c) de ne pas donner une isolation vibratoire suffisante vis-à-vis de l'environnement.

La solution apportée par le dispositif selon FR-A-2 238 872, consistant à associer à des amortisseurs en élastomère ou à ressort des supports pneumatiques disposés au voisinage et en parallèle avec les amortisseurs de manière à corriger les déséquilibres de charge par adaptation de la pression d'air dans les supports pneumatiques, ne permet pas de détecter les défaillances des supports pneumatiques eux-mêmes.

### Objet de L'invention

L'objet de l'invention est donc un nouveau type de suspension élastique des vibro-tasseuses basé sur l'utilisation de boudins pneumatiques à pression ajustable, en remplacement partiel ou total des ressorts habituellement utilisés comme éléments de suspension et d'amortissement des vibrations entre la table vibrante et le massif en béton, lesdits boudins pneumatiques comportant des moyens de détection d'un affaissement de la table vibrante ainsi que des moyens pour interrompre la vibration en cas d'affaissement de cette table.

### Description des Figures

Les figures 1 à 5 illustrent la mise en oeuvre de l'invention.

La figure 1 se rapporte à l'art antérieur et rappelle la structure générale d'une vibro-tasseuse (en coupe verticale).

La figure 2 montre la même vibro-tasseuse équipée de boudins pneumatiques selon l'invention.

La figure 3 montre le détail de montage d'un boudin pneumatique.

La figure 4 représente une variante de l'invention dans laquelle un certain nombre de boudins sont remplacés par des ressorts ou par des supports élastiques.

La figure 5 montre la répartition des boudins sous la table vibrante (en vue très schématisée).

La vibrotasseuse (1) comporte, de façon classique, un moule parallélépipédique formé de deux parois transversales (2) amovibles et deux parois longitudinales, non visibles sur la coupe. Le fond de moule est constitué par la table vibrante (3) elle-même, qui est soumise sous l'effet d'un moteur couplé à deux arbres à balourd excentré, à une vibration de composante sensiblement verticale, d'une fréquence de 10 à 30 hertz et d'une amplitude pouvant aller jusqu'à 40 millimètres. La fréquence propre de vibration de la machine à compacter est généralement comprise entre 2 et 20 hertz.

Le couvercle (4), dont le poids est relativement élevé (2 à 4 tonnes par ex) assure à la fois le tassage de la pâte carbonée par son inertie et la mise en forme du sommet de l'anode (5): pans coupés (6), bouchons (7) de scellement des tiges de suspension, rainurages divers.

Après moulage puis relevage des parois (2), l'anode (5) est dégagée par le vérin (8) en direction de la table à rouleaux (9) vers le four à cuire ou vers un stockage intermédiaire. La table vibrante (3) s'appuie, par l'intermédiaire d'un ensemble de ressorts hélicoïdaux (10) sur un massif en béton (1), qui est souvent luimême isolé du sol par une suspension élastique, de façon à réduire autant que faire se peut, la tranamission de vibrations dans l'environnement.

Selon l'invention, les ressorts (10) sont remplacés, partiellement ou en totalité, par des boudins pneumatiques gonflables (12).

Dans la réalisation illustrée sur la figure (2) on a choisi des boudins constitués de deux flasques métalliques (13A, 13B) reliés par une membrane en élastomère (14). Ces flasques sont munis de 4 inserts métalliques taraudés pour assurer leur fixation. L'un des flasques, 13B dans le cas figuré, possède un orifice de gonflage (15).

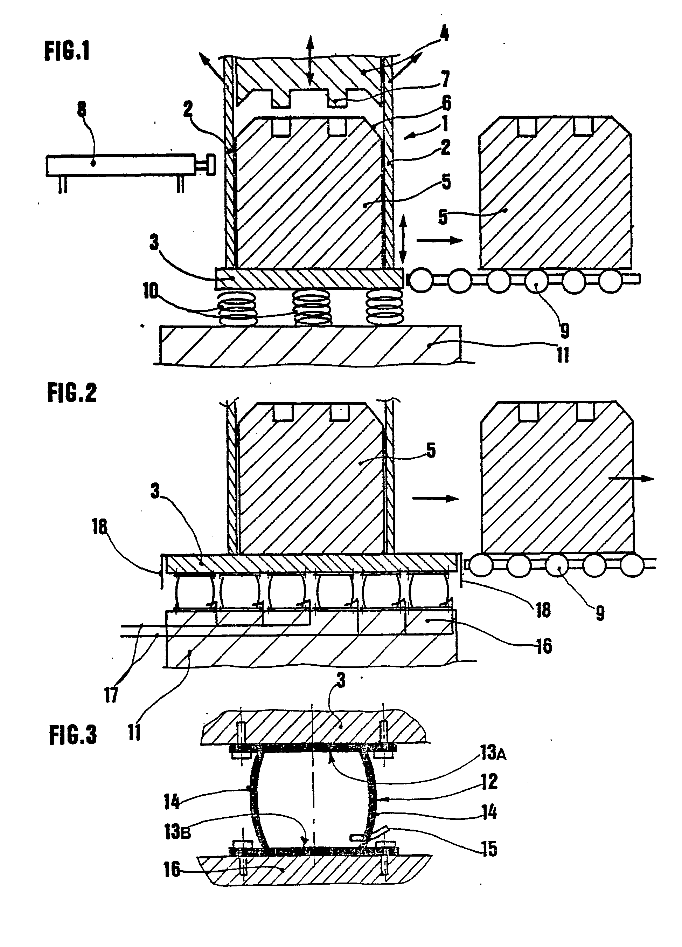

Dans le cas représenté sur la figure 2, on a remplacé 24 ressorts par 18 boudins.

Pour des raisons de sécurité, les circuits de fluide des boudins (12) ne sont pas tous montés en parallèle. Il est préférable de les répartir de façon à les relier à la source de fluide, soit individuellement, soit en plusieurs groupes alimentés séparément sous une pression de quelques bars (2 à 8 bars par exemple, soit 0,2 à 0,8 MPa) avec un ensemble de vannes de distribution et d'isolement et avec une possibilité de mise en parallèle de l'ensemble pour assurer un gonflage simultané à une pression identique; les groupes sont ensuite isolés. La pression est contrôlée par les manomètres (22) qui comportent un moyen de signalisation de toute baisse de pression.

Les boudins (12) sont montés avec l'orifice de gonflage (15) situé du côté de la table inférieure de façon que le circuit pneumatique (17) soit soumis au minimum de vibrations.

Compte tenu des masses en jeu (10 à 30 tonnes) et des efforts dus aux vibrations, il est nécessaire d'assurer la sécurité de la vibrotasseuse en cas de défaillance des boudins pneumatiques (dégonflage accidentel ou éclatement).

Pour éviter le dégonflage général, on a prévu, comme indiqué ci-dessus une séparation de l'ensemble en plusieurs groupes. Ceux-ci sont branchés en parallèle sur un réservoir intermédiaire (26) pendant la phase de gonflage; ainsi tous les boudins sont gonflés à la même pression.

Le réservoir intermédiaire est relié à une source de fluide sous pression telle qu'une bouteille d'air comprimé (23).

Lorsque les boudins sont gonflés, les groupes sont isolés en jouant sur les électrovannes.

Il est envisageable de maintenir les groupes en parallèle pendant le fonctionnement de la machine. Dans ce cas, l'isolement des groupes de boudins n'interviendrait qu'en cas de fuite détectée au moyen des instruments de mesure de la pression.

En outre, 4 capteurs de proximité (18) situés aux 4 angles de la table (3) réagissent à tout début d'affaissement de cette table et coupent automatiquement la rotation du moteur à balourds excentrés.

Un certain nombre de supports élastiques (19) sont disposés entre les deux tables de façon à limiter l'affaissement total de la table (3) en cas de dégonflage généralisé, évitant ainsi l'écrasement des boudins sous le poids de la vibrotasseuse et de l'anode.

Enfin, il est possible de conserver un certain nombre de ressorts (10), en complément ou en remplacement des supports élastiques (19) toujours dans le but d'éviter un affaissement total de la table (3).

Il est également possible d'insérer, entre l'électrovanne et les boudins, un volume additionnel (25) dont le but est de modifier le volume global des boudins et par conséquent leur raideur.

Exemple D'application

Sur les principes que l'on vient de décrire, on a équipé une vibrotasseuse, selon l'invention, de 18 boudins élastiques, du type A113, fabriqués par la société FIRESTONE, ayant un diamètre maximal de 390 mm.

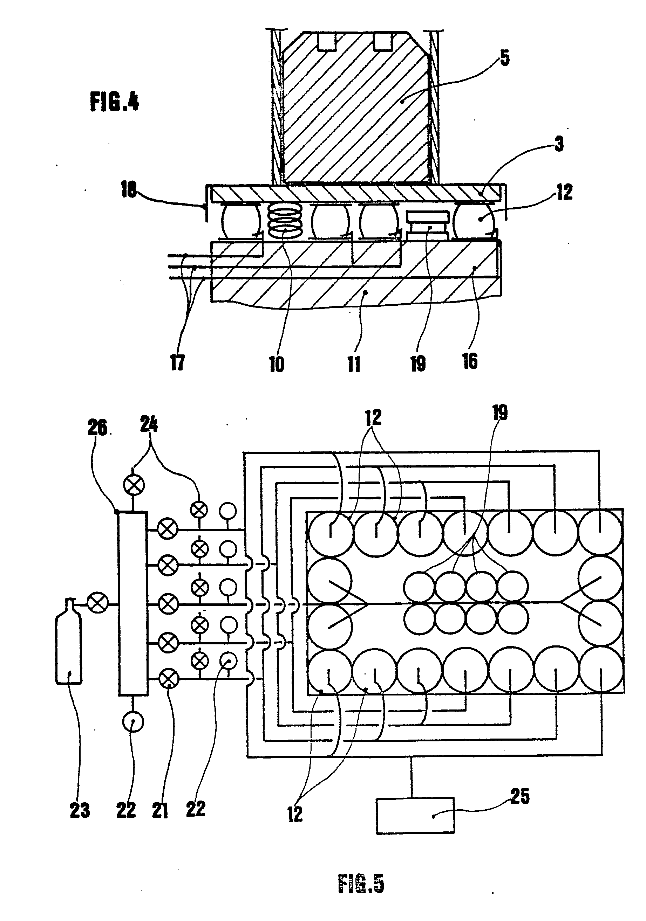

Les 18 boudins sont montés sur la périphérie du châssis. Ils sont gonflés sous une pression réglable entre 0,4 et 0,8 MPa. Ils sont répartis, du point de vue alimentation, en air comprimé, en 4 groupes de 4 plus un groupe de 2, disposés symétriquement (fig. 5).

Comme on l'a indiqué précédemment, les orifices de gonflage (15) sont disposés du côté de la table inférieure. Les boudins de chaque groupe sont réunis par des tubes en polymère du type polyamide (tel que le "RILSAN" -marque déposée-) avec raccords en laiton. Chacun des 5 groupes est relié par l'intermédiaire de vannes (21) au réservoir intermédiaire commun (26), luimême relié à la source de fluide sous pression par la vanne (20). Ces vannes permettent les opérations suivantes:

gonflage en parallèle de l'ensemble des boudins à pression contrôlée,

isolation des 5 groupes de boudins,

purge ou dégonflage partiel d'un groupe de boudins indépendamment des autres grâce aux électrovannes de purge (24).

L'ensemble du système peut être branché sur le réseau d'air comprimé de l'usine ou sur un compresseur, ou sur une bouteille (23) de gaz ou air comprimé, les volumes d'air en jeu étant relativement faibles.

Au centre de la table, 8 supports élastiques (19) de marque "PAULSTRA" permettraient d'éviter l'affaissement total de la vibrotasseuse et l'écrasement des boudins en cas de dégonflage ou d'éclatement généralisé.

La masse totale de la vibrotasseuse étant de 13,5 tonnes (couvercle: 3,9 T, table + anode: 9,6 T), la charge par boudin est de 13,5/18 = 750 kg par boudin. La raideur mesurée de l'ensemble de la suspension est de $15,8.10^6$ Newtons par mètre, soit $0,88.10^6$ N/m par boudin gonflé à 7 bars (0,7 MPa).

Avec la machine ainsi équipée, deux lots d'anodes de formats différents ont été fabriqués.

Le tableau ci-dessous montre les différences de caractéristiques entre les anodes de ces deux lots et les anodes de deux lots équivalents fabriqués avec la machine équipée de ressorts (raideur fixe = $40.10^6$ N/m).

|  | MASSE ANODE KG | MASSE COUVERCLE KG | RAIDEUR N/m | AUGMENTATION DE LA DENSITE SECHE (g/cm$^3$) PAR RAPPORT A L'ART ANTERIEUR |
|---|---|---|---|---|
| LOT A | 350 | 2200 | $12,7\ 10^6$ | + 0,015 |
| LOT B | 690 | 4000 | $15,8\ 10^6$ | + 0,005 |

La densité sèche est définie comme la densité apparente multipliée par (100 - taux de brai % /100).

Avantages procures par L'invention

La mise en oeuvre de l'invention permet:

de pouvoir régler aisément la raideur de la suspension par augmentation ou diminution de la pression de gonflage des boudins. Il est ainsi plus facile d'adapter la raideur à une modification de la masse vibrante lorsque des blocs carbonés de formats différents sont fabriqués, ou à une variation des matières premières.

d'obtenir un meilleur équilibrage de la machine. Les différents boudins étant branchés en parallèle, leur pression de gonflage est identique. La raideur de la suspension est ainsi uniformément répartie.

de pouvoir détecter la défaillance d'un boudin en observant la pression dans le circuit.

de limiter la transmission des vibrations vers l'extérieur (massif de fondation) en translatant le pic de réponse en transmitivité vers les basses fréquences. Ainsi, la fréquence du choc se trouve dans une zone d'atténuation et non d'amplification.

Tous ces avantages sont obtenus sans dégrader la compacité des blocs carbonés fabriqués.

**Revendications**

1. Dispositif de suspension de machine à compacter les blocs carbonés, du type vibrotasseuse, dans lequel la masse de pâte carbonée à mettre en forme, introduite dans un moule est disposée sur une table vibrante (3) supportée par un lourd massif (11), généralement en béton, par l'intermédiaire de moyens d'amortissement (10), caractérisé en ce que au moins une partie des moyens d'amortissement est constituée par des boudins pneumatiques gonflables (12) comportant des moyens de détection (18) d'un affaissement de la table vibrante (3) et des moyens pour interrompre la vibration en cas d'affaissement de ladite table vibrante.

2. Dispositif de suspension selon revendication 1, caractérisé en ce que les différents boudins (12) sont connectés en parallèle de façon permanente sur une même source de fluide sous une pression réglable.

3. Dispositif de suspension pneumatique selon revendication 1, caractérisé en ce que les différents boudins (12) sont connectés en parallèle pendant la phase de gonflage et isolés individuellement ou par groupes, de la source de fluide sous pression.

4. Dispositif de suspension, selon revendication 1, caractérisé en ce qu'il comporte un moyen de mesure (22) de la pression dans chaque boudin (12) ou dans chaque groupe de boudins et un moyen de signalisation de la baisse de pression dans l'un des boudins ou groupe de boudins.

5. Dispositif de suspension, selon l'une quelconque des revendications 2 à 4, caractérisé en ce que chaque boudin (12) ou groupe de boudin est relié à la source de fluide par des électro-vannes (21).

6. Dispositif de suspension, selon l'une quelconque des revendications 1 à 6, caractérisé en ce qu'il comporte des moyens élastiques auxiliaires tel que (10 ou 19) disposés entre la table vibrante (3) et le châssis inférieur (16) sur lesquels sont fixés les boudins de façon à prévenir l'affaissement de la table vibrante (3) en cas de dégonflage des boudins.

7. Dispositif de suspension selon l'une quelconque des revendications 1 à 6, caractérisé en ce que les boudins (12) sont gonflés par un fluide, gazeux ou liquide, dont la pression est régulée.

4

8. Dispositif de suspension selon revendication 7, caractérisé en ce que la source de fluide peut comporter un ou plusieurs volumes additionnels auxiliaires (25).

9. Dispositif de suspension selon l'une quelconque des revendications 1 à 8, caractérisé en ce qu'il comporte un réservoir intermédiaire (26) entre la source de fluide (23) et les vannes (21).

10. Application du dispositif de suspension selon l'une quelconque des revendications 1 à 9, à la fabrication des blocs carbonés tels que les électrodes de carbone (anodes et garnissages cathodiques) destinés à la production d'aluminium par électrolyse.

## Patentansprüche

1. Vorrichtung zum Aufhängen einer Maschine zum Kompaktieren der kohlenstoffhaltigen Blöcke des Schwingungsverdichtertyps, wobei die zu formende, in eine Form eingeführte Masse kohlenstoffhaltiger Paste auf einem Rütteltisch (3) angeordnet wird, der von einer massiven Last (11), allgemein aus Beton, über Dämpfungsmittel (10) abgestützt ist, dadurch gekennzeichnet, daß wenigstens ein Teil der Dämpfungsmittel aus aufblasbaren pneumatischen Wülsten (12) besteht, die Mittel (18) zum Erfassen einer Senkung des Rütteltisches (3) und Mittel zum Unterbrechen der Schwingung im Senkungsfall des Rütteltisches aufweisen.

2. Aufhängevorrichtung nach Anspruch 1, dadurch gekennzeichnet, daß die verschiedenen Wülste (12) dauernd parallel an dieselbe Fluidquelle mit regulierbarem Druck angeschlossen sind.

3. Pneumatische Aufhängevorrichtung nach Anspruch 1, dadurch gekennzeichnet, daß die verschiedenen Wülste (12) während der Aufblasphase parallel an die Druckfluidquelle angeschlossen sind und von ihr einzeln oder in Gruppen isoliert sind.

4. Aufhängevorrichtung nach Anspruch 1, dadurch gekennzeichnet, daß sie ein Mittel (22) zum Messen des Drucks in jeder Wulst (12) oder in jeder Wulstgruppe und ein Mittel zur Anzeige des Druckabfalls in einer der Wülste oder Wulstgruppen aufweist.

5. Aufhängevorrichtung nach irgendeinem der Ansprüche 2 bis 4, dadurch gekennzeichnet, daß jede Wulst (12) oder Wulstgruppe an die Fluidquelle über Elektroventile (21) angeschlossen ist.

6. Aufhängevorrichtung nach irgendeinem der Ansprüche 1 bis 5, dadurch gekennzeichnet, daß sie elastische Hilfsmittel, wie (10 oder 19), aufweist, die zwischen dem Rütteltisch (3) und dem unteren Chassis (16), an denen die Wülste befestigt sind, derart angeordnet sind, um die Senkung des Rütteltisches (3) im Fall der Entleerung der Wülste zu verhindern.

7. Aufhängevorrichtung nach irgendeinem der Ansprüche 1 bis 6, dadurch gekennzeichnet, daß die Wülste (12) mit einem gasförmigen oder flüssigen Fluid aufgeblasen werden, dessen Druck reguliert wird.

8. Aufhängevorrichtung nach Anspruch 7, dadurch gekennzeichnet, daß die Fluidquelle ein oder mehrere zusätzliche Hilfsvolumina (25) aufweist.

9. Aufhängevorrichtung nach irgendeinem der Ansprüche 1 bis 8, dadurch gekennzeichnet, daß sie einen Zwischenspeicher (26) zwischen der Fluidquelle (23) und den Ventilen (21) aufweist.

10. Verwendung der Aufhängevorrichtung nach irgendeinem der Ansprüche 1 bis 9 zur Herstellung kohlenstoffhaltiger Blöcke, wie z.B. der Kohlenstoffelektroden (Anoden und Kathodenauskleidungen), die zur Aluminiumerzeugung durch Elektrolyse bestimmt sind.

## Claims

1. A suspension device for a machine for compacting carbonaceous blocks, of the vibrocompactor type, wherein the mass of carbonaceous paste to be shaped, which is introduced into a mould, is disposed on a vibrating table (3) supported by a heavy mass (11), generally of concrete, by way of damper means (10), characterised in that at least a part of the damper means is formed by inflatable pneumatic cushions (12) comprising means (18) for detecting collapse of the vibrating table (3) and means for interrupting the vibration in the event of collapse of the vibrating table (3).

2. A suspension device according to claim 1 characterised in that the different cushions (12) are connected in parallel permanently to the same source of fluid at a controllable pressure.

3. A pneumatic suspension device according to claim 1 characterised in that the different cushions (12) are connected in parallel during the inflation phase and isolated individually or in groups from the pressure fluid source.

4. A suspension device according to claim 1 characterised in that it comprises a means (22) for measuring the pressure in each cushion (12) or in each group of cushions and a means for signalling the drop in pressure in one of the cushions or group of cushions.

5. A suspension device according to any one of claims 2 to 4 characterised in that each cushion (12) or group of cushions is connected to the fluid source by way of electrically operated valves (21).

6. A suspension device according to any one of claims 1 to 5 characterised in that it comprises auxiliary resilient means such as (10 or 19) disposed between the vibrating table (3) and the lower frame structure (16), on which the cushions are fixed so as to prevent collapse of the vibrating table (3) in the event of deflation of the cushions.

7. A suspension device according to any one of claims 1 to 6 characterised in that the cushions (12) are inflated by a gaseous or liquid fluid which is at a controlled pressure.

8. A suspension device according to claim 7 characterised in that the fluid source may comprise one or more additional auxiliary volumes (25).

9. A suspension device according to any one of claims 1 to 8 characterised in that it includes an intermediate tank (26) between the fluid source (23) and the valves (21).

10. Use of the suspension device according to any one of claims 1 to 9 for the production of carbonaceous blocks such as carbon electrodes (anodes and cathodic linings) which are intended for the production of aluminium by electrolysis.

**FIG.1**

**FIG.2**

**FIG.3**

**FIG.4**

**FIG.5**